# EUROPÄISCHE PATENTSCHRIFT

(11) **EP 2 665 898 B1**
(45) Veröffentlichungstag und Bekanntmachung des Hinweises auf die Patenterteilung: **15.10.2014**
(21) Anmeldenummer: 12700790.4
(22) Anmeldetag: 19.01.2012
(51) Int. Cl.: F01D 25/30, F02C 7/24, F02C 5/10, F02K 1/82

(54) **GASTURBINENABGASKONUS**
GAS TURBINE EXHAUST CONE
CÔNE D'ÉCHAPPEMENT DE TURBINE À GAZ

(30) Priorität: 19.01.2011 DE 102011008921
(43) Veröffentlichungstag der Anmeldung: 27.11.2013
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Hoefer & Partner
(86) Internationale Anmeldenummer: PCT/EP2012/000242
(87) Internationale Veröffentlichungsnummer: WO 2012/097997

(56) Entgegenhaltungen:
- EP-A2- 1 391 597
- US-A- 2 988 302
- US-A- 4 064 961
- US-A- 4 240 519
- US-A1- 2007 256 889

## Beschreibung

Die Erfindung bezieht sich auf einen Gasturbinenabgaskonus, welcher am Ausströmbereich einer Gasturbine angeordnet ist.

Bei Gasturbinen für Flugzeugtriebwerken ist es erforderlich, das Geräuschniveau zu senken. Zu diesem Zweck sind auch unterschiedliche Maßnahmen bekannt, um das aus einer Abströmdüse stromab der Turbine austretende Gasstrahlgeräusch zu minimieren.

Aus dem Stand der Technik ist es bekannt, niedrige Frequenzen, die sich insbesondere bei Triebwerken mit Magerverbrennung ergeben, zu dämpfen. Eine Geräuschdämpfung erfolgt dabei über einen Helmholtz-Resonator. Es ist bekannt, in dem Anströmbereich des Abgaskonus einen derartigen Helmholtz-Resonator auszubilden, während der stromab liegende Endbereich des Abgaskonus lediglich als geometrischer Körper ausgebildet ist. Bekannte Helmholtz-Resonatoren werden dabei als System von radialen Wänden und inneren zylindrischen Führungen ausgestaltet und in Abhängigkeit von den Frequenzen dimensioniert.

Bei den bekannten Konstruktionen erweist es sich als nachteilig, dass diese im Hinblick auf die auftretenden Gastemperaturen mechanisch stark belastet sind und deshalb Verstärkungselemente erfordern. Dies führt zu einer ein relativ hohes Gewicht aufweisenden Konstruktion, auch bedingt durch unterschiedliche Wandungen und Versteifungselemente. Zusätzlich ergibt sich eine sehr aufwendige Fertigung. Die Herstellungskosten werden auch noch durch interne Akustik-Maßnahmen (Perforationen oder Ähnliches) erhöht. Auch die axiale Länge eines derartigen Resonators erfordert einen erheblichen Bauraum und bringt zusätzliches Gewicht.

Die aus dem Stand der Technik bekannten Konstruktionen weisen im vorderen Teil des Gasturbinenabgaskonus (die Begriffe "vordere" und "hintere" beziehen sich jeweils auf die Durchströmungsrichtung des Gasturbine) eine starre Konstruktion auf, welche nach dem Helmholtz-Resonator-Prinzip arbeitet. Eine derartige Konstruktion zeigt beispielsweise die US 2010/0012423 A1. Dort sind starre Wände vorgesehen, welche den Nachteil bringen, dass sich zum einen eine schlechte Dämpfung ergibt und dass die Gesamtkonstruktion aufwendig und teuer in der Herstellung ist. Ein weiterer Nachteil besteht darin, dass durch die thermischen Expansionen erhebliche Rissgefahren bestehen.

Eine ähnliche Konstruktion zeigt die US 2007/0272477 A1. Auch dort sind starre radiale und axiale Trennwände vorgesehen, welche einzelne Kammern begrenzen. Die Gesamtkonstruktion ist sehr aufwendig in der Herstellung und anfällig für Thermospannungsrisse.

US 4 064 961 A : Der in dieser Druckschrift beschriebene Aufbau eines Abgaskonus beschreibt zwar innenliegende Zellen 24 (siehe Fig. 5), welche wabenartig ausgebildet sind. Diese Wabenstruktur wird von einem Material 28 umgeben, welches ebenfalls wabenartig beschrieben ist (siehe Spalte 3, Zeile 9ff).

Die US 2007/0256889 A1 zeigt einen Gasturbinenabgaskonus, dessen Innenraum in einzelne Kammern unterteilt ist, deren axiale Trennwände mit Öffnungen versehen sind.

Der Erfindung liegt die Aufgabe zugrunde, einen Gasturbinenabgaskonus der eingangs beschriebenen Art zu schaffen, welcher bei einfachem Aufbau und hoher Dämpfungswirkung kostengünstig herstellbar ist und ein geringes Gewicht aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der Gasturbinenabgaskonus eine Außenwandung und eine Innenwandung umfasst, welche sich im Wesentlichen parallel zueinander erstrecken und zwischen denen eine Wabenstrukturschicht angeordnet ist. Diese Wabenstrukturschicht dient insbesondere zur Absorption oder Dämpfung von hohen Frequenzen.

Weiterhin ist erfindungsgemäß vorgesehen, dass radial innerhalb der Innenwandung zumindest eine Ringkammer vorgesehen ist, welche zu einer Mittelachse des Gasturbinenabgaskonus, welche mit der Triebwerksachse der Gasturbine identisch ist, zentriert ist.

Der erfindungsgemäße Gasturbinenabgaskonus zeichnet sich durch eine Reihe erheblicher Vorteile aus.

Beim Stand der Technik ist eine Vielzahl von Trennwänden vorgesehen, die jeweils unterschiedliche Betriebstemperaturen aufweisen und somit zu einer erheblichen Materialbelastung führen. Aus diesem Grunde sind die bisher bekannten Konstruktionen sehr dickwandig ausgebildet. Im Gegensatz hierzu ist erfindungsgemäß zumindest eine Ringkammer ausgebildet, deren Wandungen elastisch gelagert werden können, da die Wandungen der Ringkammer keine Kräfte zu übertragen haben. Die Stabilität der Gesamtkonstruktion ergibt sich nicht aus den Trennwänden der Ringkammern.

Ein weiterer Vorteil der erfindungsgemäßen Konstruktion liegt darin, dass die Wabenstrukturschicht sich an der gesamten äußeren Wandung des Gasturbinenabgaskonus erstrecken kann, so dass sich ein hohes Maß an Schallabsorption ergibt.

Unter "Wabenstruktur" ist im Sinne der Erfindung eine bienenwabenähnliche Konstruktion zu verstehen, wobei die Waben nicht zwingend einen sechseckigen Querschnitt haben müssen. Sie können vielmehr auch rund sein. Entscheidend ist, dass die benachbarten Volumina der Waben jeweils zueinander versetzt sind, um eine dichtestmögliche Packung zu erreichen.

Durch die erfindungsgemäß vorgesehene zumindest eine Ringkammer ist es möglich, die Schalldämpfung oder Schallabsorption tieferer Frequenzen gezielt vorzunehmen. Die Volumina und Längen der einzelnen Ringkammern können entsprechend optimiert werden. Erfindungsgemäß ergibt sich somit eine leichte und kompakte Bauweise des Gasturbinenabgaskonus bzw. des akustischen Absorbers.

Erfindungsgemäß ist es besonders günstig, wenn mehrere Ringkammern vorgesehen sind und jede der Ringkammern über eine Schalleintrittsöffnung verfügt. Somit kann durch die jeweilige Ringkammer ein Helmholtz-Resonator gebildet werden, der an einem bestimmten Frequenzbereich angepasst und für diesen optimiert ist. Erfindungsgemäß ist es somit nicht erforderlich, aufwendige axiale oder gedrehte Wandungen vorzusehen, so wie dies aus dem Stand der Technik bekannt ist. Hierdurch ergeben sich erfindungsgemäß Vorteile hinsichtlich der unterschiedlichen thermischen Ausdehnung verschiedener Bereiche des Gasturbinenabgaskonus sowie der sich daraus ergebenden Dichtungsprobleme.

In besonders günstiger Ausgestaltung der Erfindung ist vorgesehen, dass der Gasturbinenabgaskonus einen in Strömungsrichtung vorne liegenden Vorderteil und einen anschließenden Hinterteil umfasst, in welchen jeweils zumindest eine der Ringkammern angeordnet ist. Somit kann der Gasturbinenabgaskonus den in der Praxis auftretenden Frequenzbereichen und deren Zuordnung in axialer Richtung angepasst werden.

Besonders günstig ist es, wenn konzentrisch zueinander mehrere Ringkammern vorgesehen sind, welche jeweils mit zumindest einem Teil ihres Volumens an die Innenwandung angrenzen. Diese mehreren Ringkammern können entweder in Axialrichtung oder geneigt hierzu vorgesehen sein. Erfindungsgemäß ergeben sich somit unterschiedlichste Ausgestaltungsvarianten, welche eine optimierte Anpassung an die jeweiligen Betriebsverhältnisse ermöglichen.

Von besonderem Vorteil ist erfindungsgemäß, dass die jeweilige Ringkammer zumindest eine Trennwand umfasst, welche elastisch an dem Gasturbinenabgaskonus gelagert ist. Hierdurch werden thermische Belastungen durch unterschiedliche thermische Ausdehnungen vermieden.

Weiterhin ist es vorteilhaft, wenn die Ringkammer durch eine Abschlusswand begrenzt ist, welche bevorzugt mit einer Schalldurchtrittsöffnung versehen ist und/oder mit einer Wabenstruktur versehen ist. Hierdurch kann eine zusätzliche Dämpfung und Schallabsorption erfolgen.

Die Öffnungen, durch welche Schallwellen von der Wabenstrukturschicht oder von der Außenseite des Gasturbinenabgaskonus in die zumindest eine Ringkammer gelangen, ist bevorzugterweise in einem Winkel zu der Ebene dieser Wandung angeordnet. Hierdurch ergibt sich eine größere Länge der Schalldurchtrittsöffnung, durch welche die Schalldämpfung verbessert wird.

Erfindungsgemäß ist es besonders vorteilhaft, wenn die Ringkammern zueinander und zu einem verbleibenden Innenvolumen des Gasturbinenabgaskonus abgeschlossen sind.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Axialschnittansicht eines Ausführungsbeispiels des erfindungsgemäßen Gasturbinenabgaskonus,
- Fig. 3: eine perspektivische Ansicht, teils im Schnitt, analog Fig. 2,
- Fig. 4: eine perspektivische Teil-Schnittansicht des Vorderteils des in den Fig. 2 und 3 gezeigten Gasturbinenabgaskonus,
- Fig. 5: eine vergrößerte Teil-Schnittansicht des Vorderteils, analog Fig. 2,
- Fig. 6: eine vergrößerte Detailansicht gemäß Fig. 5, und
- Fig. 7: eine perspektivische Teil-Schnittansicht des Hinterteils des erfindungsgemäßen Gasturbinenabgaskonus.

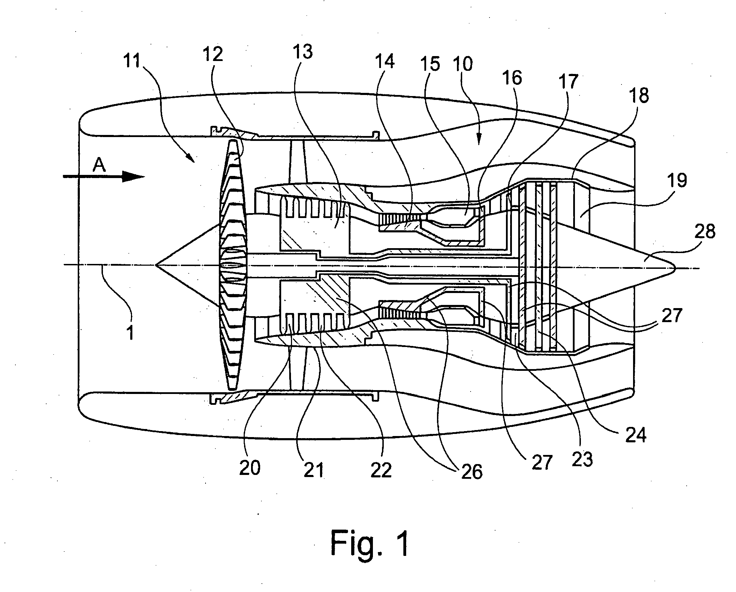

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Die Fig. 1 zeigt weiterhin mit dem Bezugszeichen 28 einen Abgaskonus.

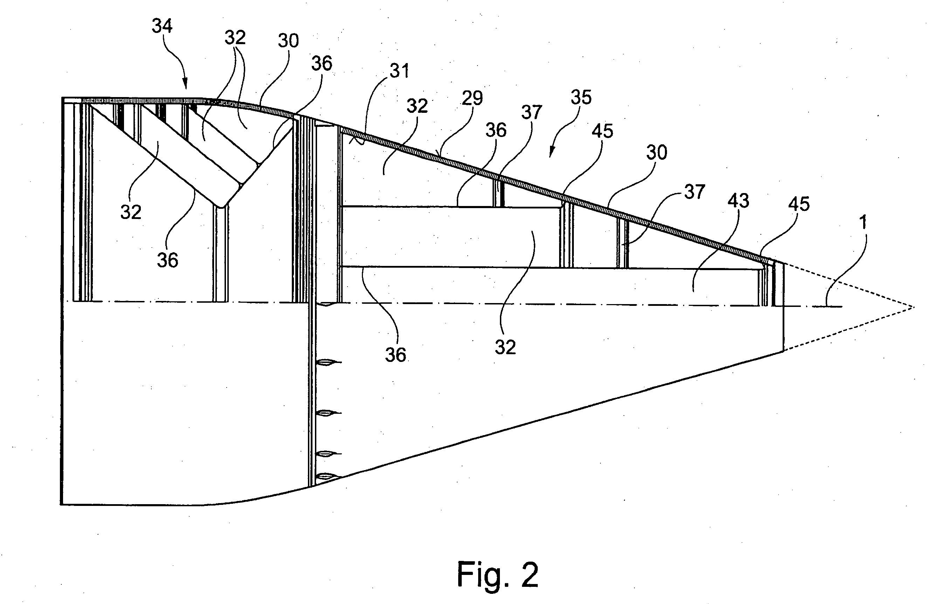

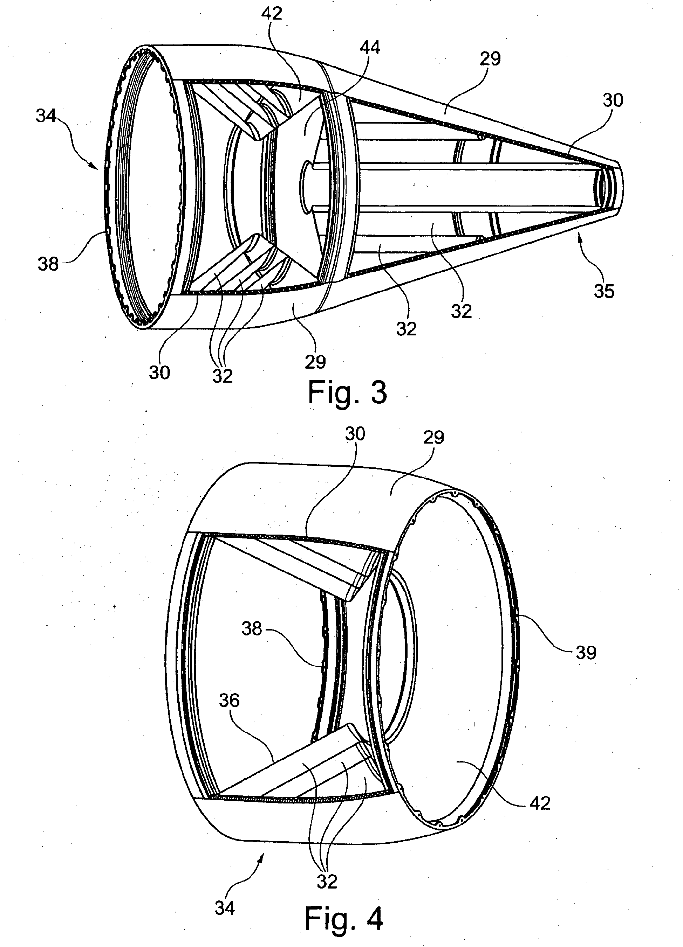

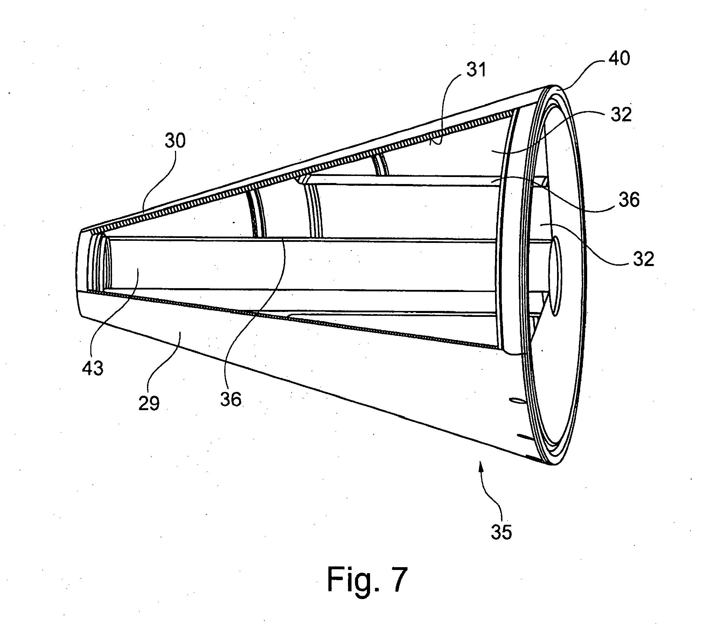

Die Fig. 2 zeigt in schematischer Darstellung einen Axialschnitt durch ein Ausführungsbeispiel eines erfindungsgemäßen Gasturbinenabgaskonus. Dieser umfasst ein Vorderteil 34 sowie ein Hinterteil 35. Gemäß der Darstellung von Fig. 2 erfolgt die Strömung durch die Gasturbine von links nach rechts. Das Vorderteil 34 ist im Wesentlichen zylindrisch ausgebildet, während der Hinterteil 35 kegelförmig ist. Der Vorderteil 34 ist mittels eines Flansches 38 in üblicher Weise gelagert (siehe beispielsweise Fig. 3 und 4). Weiterhin sind der Vorderteil 34 und der Hinterteil 35 über Flansche 39 bzw. 40 (siehe Fig. 4 und 7) in üblicher Weise verbunden.

Sowohl der Vorderteil 34 als auch der Hinterteil 35 weisen jeweils eine Außenwandung 29 auf, zu der sich parallel eine Innenwandung 31 erstreckt. Zwischen den Wandungen 29 und 31 ist eine Wabenschicht 30 ausgebildet, welche honigwabenartig ausgestaltet ist und Waben aufweist, deren Volumen sich in radialer Richtung erstreckt. Die Außenwandung 29 ist mit einer Vielzahl von Ausnehmungen versehen, beispielsweise mikro-perforiert, so dass Schallwellen durch die im Einzelnen nicht dargestellten Ausnehmungen der Außenwandung 29 in die Wabenschicht 30 eintreten und dort gedämpft werden können.

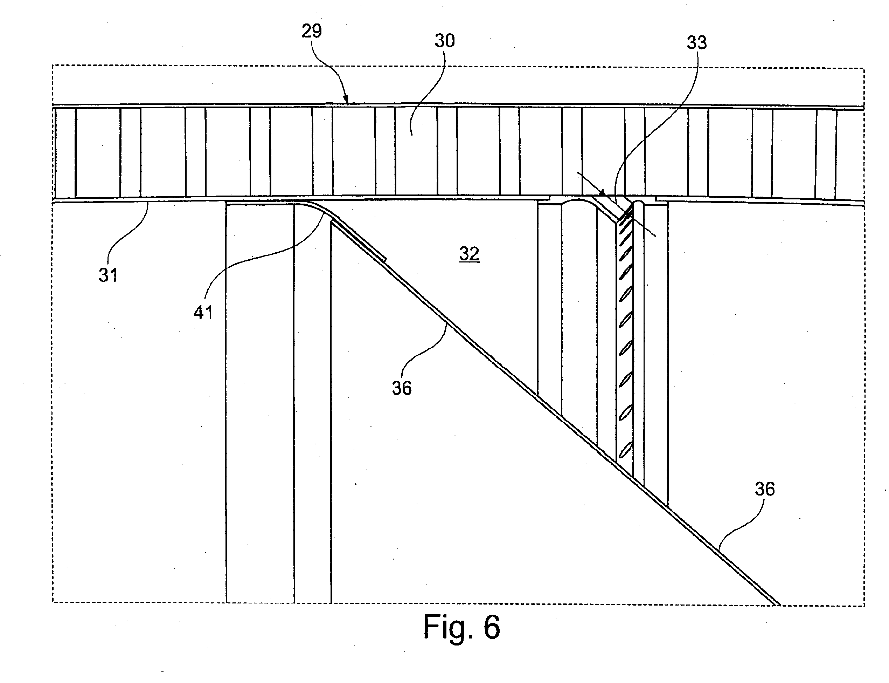

Die Fig. 2 zeigt weiterhin, dass radial innerhalb der Innenwandung 31 mehrere Ringkammern 32 angeordnet sind, welche sich in einem Winkel zur zentrischen Achse 1 erstrecken. Die Ringkammern sind über Durchgangsausnehmungen 33 (Schalleintrittsöffnungen) mit der Wabenschicht verbunden, so wie dies in Fig. 6 in vergrößerter Darstellung gezeigt ist. Die Durchgangsausnehmungen 33 sind ebenfalls in einem Winkel zur zentrischen Achse 1 angeordnet, um die wirksame Gesamtlänge der Durchgangsausnehmung 33 (Schalleintrittsöffnung) zu erhöhen.

Wie sich aus Fig. 6 ergibt, ist eine Trennwand 36 (Wandung der Ringkammer 32) mittels einer elastischen Lagerung 41 an der Innenwandung 31 gelagert. Somit werden durch thermische Ausdehnungen hervorgerufene Längenänderungen nicht in die Gesamtkonstruktion des Gasturbinenabgaskonus übertragen. Die aus dem Stand der Technik bekannten Probleme hinsichtlich Rissbildung, Überdimensionierung oder Ähnliches, entfallen vollständig.

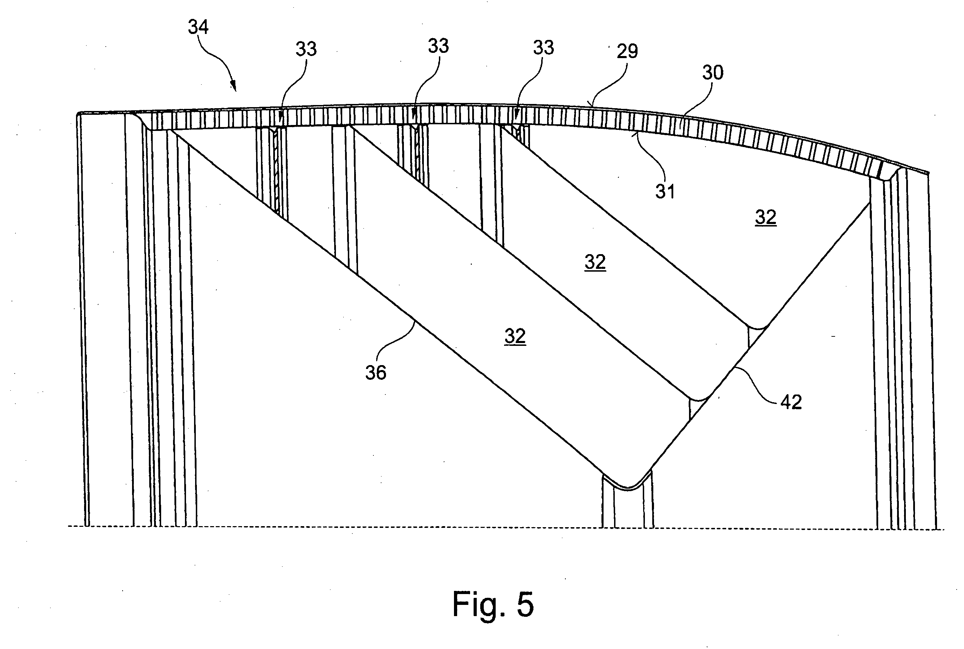

Die Fig. 2 zeigt bei dem Ausführungsbeispiel drei zueinander konzentrische Ringkammern 32 in dem Vorderteil 34. Dies ist auch in den Fig. 3 und 4 verdeutlichend dargestellt. Die drei Ringkammern 32 sind, wie in Fig. 5 gezeigt, mittels einer elastisch an den Trennwänden 36 befestigten vorderen Abschlusswand 42 begrenzt.

Wie sich aus den Fig. 2 und 7 ergibt, umfasst der konische Hinterteil 35 ebenfalls zwei zueinander konzentrische Ringkammern 32, welche mit geeigneten Schalleintrittsöffnungen zur Umgebung bzw. zur Wabenschicht 30 hin in Verbindung stehen. Im Zentrum des Hinterteils 35 ist ein Mittelkanal 34 ausgebildet, welcher in üblicher Weise genutzt werden kann, beispielsweise zu Entlüftungszwecken.

Die Fig. 2 und 7 zeigen, dass die konzentrischen Ringkammern 32 durch die Art ihrer Ausgestaltung und Anordnung die Möglichkeit eröffnen, sehr große Dämpfungsvolumina zu realisieren.

Es ergibt sich, dass auch die in dem Hinterteil 35 angeordneten Ringkammern 32 hinsichtlich ihrer Trennwände 36 mittels elastischer Lagerungen 45 gelagert sind, so dass Materialbeanspruchungen durch thermische Ausdehnungen vermieden werden können. Es ergibt sich eine leichte, kostengünstig herstellbare Gesamtkonstruktion.

### Bezugszeichenliste:

- 1: Triebwerksachse / zentrische Achse
- 10: Gasturbinentriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse / Verkleidung
- 22: Kompressorlaufschaufeln
- 23: Leitschaufeln
- 24: Turbinenschaufeln
- 26: Kompressortrommel oder -scheibe
- 27: Turbinenrotornabe
- 28: Abgaskonus
- 29: Außenwandung
- 30: Wabenschicht
- 31: Innenwandung
- 32: Ringkammer
- 33: Durchgangsausnehmung (Schalleintrittsöffnung)
- 34: Vorderteil
- 35: Hinterteil
- 36: Trennwand (Wandung)
- 37: Abschlusswand
- 38: Flansch
- 39: Flansch
- 40: Flansch
- 41: Elastische Lagerung
- 42: Vordere Abschlusswand
- 43: Mittelkanal
- 44: Abschlusswand
- 45: Elastische Lagerung

## Patentansprüche

1. Gasturbinenabgaskonus mit einer Außenwandung (29), welche mit einer Vielzahl von Ausnehmungen versehen ist, mit einer an der Innenseite der Außenwandung (29) angeordneten Wabenstrukturschicht (30), welche sich entlang der Innenseite der Außenwandung (29) erstreckt, mit einer sich im Wesentlichen parallel zur Außenwandung (29) erstreckenden, mit der Wabenstruktur (30) verbundenen Innenwandung (31), mit zumindest einer an die Innenwandung (31) angrenzenden und zu einer zentrischen Achse (1) zentrierten Ringkammer (32), wobei die Innenwandung (31) mit Durchgangsausnehmungen (33) versehen ist, welche den Bereich der Wabenstruktur (30) mit der Ringkammer (32) verbinden, die jeweilige Ringkammer (32) zumindest eine Trennwand umfasst, welche elastisch in dem Gasturbinenabgaskonus (28) gelagert ist, und wobei der Gasturbinenabgaskonus (28) einen in Strömungsrichtung vorne liegenden Vorderteil (34) und einen anschließenden Hinterteil (35) umfasst, in welchen jeweils zumindest eine Ringkammer (32) angeordnet ist, **dadurch gekennzeichnet, dass** sich die Ringkammer (32) im Hinterteil (35) in Axialrichtung parallel zu einer zentrischen Achse (1) des Gasturbinenabgaskonus und die Ringkammer (32) im Vorderteil (34) in einem Winkel zu der zentrischen Achse (1) des Gasturbinenabgaskonus (28) erstrecken.

2. Gasturbinenabgaskonus nach Anspruch 1, **dadurch gekennzeichnet, dass** konzentrisch zueinander mehrere Ringkammern (32) vorgesehen sind, welche jeweils mit zumindest einem Teil ihres Volumens an die Innenwandung (31) angrenzen.

3. Gasturbinenabgaskonus nach einem der Ansprüche 1 oder 2, **dadurch gekennzeichnet, dass** die Ringkammer (32) durch eine Abschlusswand (37) begrenzt wird, welche mit einer Schalldurchtrittsöffnung versehen ist und/oder mit einer Wabenstruktur versehen ist.

4. Gasturbinenabgaskonus nach einem der Ansprüche 1 bis 3, **dadurch gekennzeichnet, dass** eine Schalldurchtrittsöffnung in einem Winkel zu der Ebene der Wandung angeordnet ist.

5. Gasturbinenabgaskonus nach einem der Ansprüche 1 bis 4, **dadurch gekennzeichnet, dass** die Ringkammern (32) zueinander zu einem verbleibenden Innenvolumen des Gasturbinenabgaskonus (28) abgeschlossen sind.

6. Gasturbinenabgaskonus nach einem der Ansprüche 1 bis 5, **dadurch gekennzeichnet, dass** die Wandungen der Wabenstrukturschicht im Wesentlichen radial angeordnet sind.

## Claims

1. Gas-turbine exhaust cone having an outer wall (29), which is provided with a plurality of recesses, a honeycomb-structured layer (30), which is arranged on the inside of the outer wall (29) and extends along the inside of the outer wall (29), an inner wall (31), which extends substantially parallel to the outer wall (29) and is connected to the honeycomb structure (30), and at least one annular chamber (32), which adjoins the inner wall (31) and is centered relative to a center axis (1), where the inner wall (31) is provided with passage recesses (33) connecting the area of the honeycomb structure (30) to the annular chamber (32), where the respective annular chamber (32) includes at least one partition wall which is elastically mounted in the gas-turbine exhaust cone (28), and where the gas-turbine exhaust cone (28) includes a front part (34) which is at the front in the flow direction, and an adjoining rear part (35), in each of which parts at least one annular chamber (32) is arranged, **characterized in that** in the rear part (35) the annular chamber (32) extends in the axial direction parallel to a center axis (1) of the gasturbine exhaust cone, and that in the front part (34) the annular chamber (32) extends at an angle to the center axis (1) of the gas-turbine exhaust cone (28).

2. Gas-turbine exhaust cone in accordance with Claim 1, **characterized in that** several annular chambers (32) are provided concentrically to one another, each adjoining the inner wall (31) with at least part of its volume.

3. Gas-turbine exhaust cone in accordance with one of the Claims 1 or 2, **characterized in that** the annular chamber (32) is delimited by a closure wall (37) which is provided with a sound passage opening and/ or with a honeycomb structure.

4. Gas-turbine exhaust cone in accordance with one of the Claims 1 to 3, **characterized in that** a sound passage opening is arranged at an angle to the plane of the wall.

5. Gas-turbine exhaust cone in accordance with one of the Claims 1 to 4, **characterized in that** the annular chambers (32) are closed off from one another relative to a remaining inner volume of the gas-turbine exhaust cone (28).

6. Gas-turbine exhaust cone in accordance with one of the Claims 1 to 5, **characterized in that** the walls of the honeycomb-structured layer are arranged substantially radial.

## Revendications

1. Cône d'échappement de turbine à gaz comportant une paroi extérieure (29) munie d'une pluralité d'évidements, une couche de structure en nid d'abeilles (30) placée sur la face interne de la paroi extérieure (29) et s'étendant le long de la face interne de la paroi extérieure (29), une paroi intérieure (31) reliée à la structure en nid d'abeilles (30) et s'étendant pour l'essentiel parallèlement à la paroi extérieure (29), et au moins une chambre annulaire (32) centrée par rapport à un axe centrique (1) et adjacente à la paroi intérieure (31), sachant que la paroi intérieure (31) est munie d'évidements traversants (33) qui relient la zone de la structure en nid d'abeilles (30) à la chambre annulaire (32), que la chambre annulaire (32) respective comprend au moins une cloison logée de manière élastique dans le cône d'échappement de turbine à gaz (28), et que le cône d'échappement de turbine à gaz (28) comprend une partie avant (34) située en amont dans le sens d'écoulement et suivie d'une partie arrière (35), dans lesquelles est respectivement placée au moins une chambre annulaire (32), **caractérisé en ce que** dans la partie arrière (35), la chambre annulaire (32) s'étend dans le sens axial parallèlement à un axe centrique (1) du cône d'échappement de turbine à gaz, et que dans la partie avant (34), la chambre annulaire (32) s'étend suivant un angle par rapport à l'axe centrique (1) du cône d'échappement de turbine à gaz (28).

2. Cône d'échappement de turbine à gaz selon la revendication n° 1, **caractérisé en ce que** sont prévues plusieurs chambres annulaires (32) concentriques les unes par rapport aux autres, qui respectivement jouxtent la paroi intérieure (31) avec au moins une partie de leur volume.

3. Cône d'échappement de turbine à gaz selon une des revendications n° 1 ou n° 2, **caractérisé en ce que** la chambre annulaire (32) est délimitée par une paroi obturatrice (37) qui est munie d'un orifice de passage du son et/ ou d'une structure en nid d'abeilles.

4. Cône d'échappement de turbine à gaz selon une des revendications n° 1 à n° 3, **caractérisé en ce qu'**un orifice de passage du son est disposé suivant un angle par rapport au plan de la paroi.

5. Cône d'échappement de turbine à gaz selon une des revendications n° 1 à n° 4, **caractérisé en ce que** les chambres annulaires (32) sont fermées les unes par rapport aux autres relativement à un volume intérieur restant du cône d'échappement de turbine à gaz (28).

6. Cône d'échappement de turbine à gaz selon une des revendications n° 1 à n° 5, **caractérisé en ce que** les parois de la couche de structure en nid d'abeilles sont pour l'essentiel disposées radialement.
